# EUROPEAN PATENT APPLICATION

(11) **EP 4 468 779 A1**
(43) Date of publication of application: **27.11.2024**
(21) Application number: 23758957.7
(22) Date of filing: 30.01.2023
(51) Int. Cl.: H04W 28/00

(54) **INTERFERENCE AVOIDANCE METHOD AND RELATED APPARATUS**

(30) Priority: 24.02.2022 CN 202210177402
(71) Applicant: Huawei Technologies Co., Ltd., Shenzhen, Guangdong 518129 (CN)
(72) Inventor: HU, Xingxing, Shenzhen, Guangdong 518129 (CN)
(74) Representative: Gill Jennings & Every LLP
(86) International application number: PCT/CN2023/073813
(87) International publication number: WO 2023/160332

(57) **Abstract**

This application provides an interference avoidance method and a related apparatus. The method includes: A first device receives first indication information from a second device. The first indication information indicates a first geographic area, and the first geographic area overlaps with a geographic area covered by the first device, so that the first device performs interference avoidance in the first geographic area. This can effectively avoid interference, and improve resource utilization.

## Description

This application claims priority to Chinese Patent Application No. 202210177402.3, filed with the China National Intellectual Property Administration on February 24, 2022, and entitled "INTERFERENCE AVOIDANCE METHOD AND RELATED APPARATUS", which is incorporated herein by reference in its entirety.

### TECHNICAL FIELD

This application relates to the field of communication technologies, and in particular, to an interference avoidance method and a related apparatus.

### BACKGROUND

Currently, co-channel interference or adjacent-channel interference may exist in cells between different base stations. To avoid co-channel interference or adjacent-channel interference, frequency domain resources used by different base stations are generally staggered. For example, a frequency domain resource used by a base station 1 is different from a frequency domain resource used by a base station 2. However, in this manner of avoiding co-channel interference or adjacent-channel interference, frequency domain resources available to the base station 1 may be reduced. For example, co-channel interference or adjacent-channel interference exists between the base station 1 and a base station 3. Therefore, the frequency domain resource used by the base station 1 also needs to be different from a frequency domain resource used by the base station 3. In conclusion, if frequency domain resources used by different base stations are staggered to implement interference avoidance, resource utilization may be low.

### SUMMARY

This application provides an interference avoidance method and a related apparatus. This can effectively avoid interference, and improve resource utilization.

According to a first aspect, an interference avoidance method is provided. The method includes: A first device receives first indication information from a second device, where the first indication information indicates a first geographic area, and the first geographic area overlaps with a geographic area covered by the first device; and the first device performs interference avoidance in the first geographic area. It can be learned that because the first geographic area overlaps with the geographic area covered by the first device, the first device performs interference avoidance in the first geographic area, and the first device does not perform interference avoidance in a geographic area other than the first geographic area. Therefore, interference avoidance is implemented more accurately and effectively by using technical solutions of this application. Further, because the first device does not need to stagger, in another geographic area, a used frequency domain resource and a frequency domain resource used by another network device to avoid interference. This improves resource utilization.

Optionally, with reference to the first aspect, when the first device is a terrestrial network device, and the second device is a terrestrial network device, or the second device is a non-terrestrial network device, or when the first device and the second device are non-terrestrial network devices, that the first device performs interference avoidance in the first geographic area includes: The first device schedules, in the first geographic area by using a first frequency domain resource, a terminal device in a cell managed by the first device, where the first frequency domain resource is a frequency domain resource available to the first device, or the first frequency domain resource does not include a frequency domain resource available to a second device; the first device does not schedule, in the first geographic area, a terminal device in a cell managed by the first device; or the first device indicates a terminal device in a cell managed by the first device to hand over to a cell on another frequency. It can be learned that interference avoidance is performed more accurately and effectively. In addition, the first device does not need to stagger, in another geographic area, a used frequency domain resource and a frequency domain resource used by another network device to avoid interference. This improves resource utilization. In addition, the first device does not schedule, in the first geographic area, the terminal device in the cell managed by the first device, or the first device indicates the terminal device in the cell managed by the first device to hand over to a cell on another frequency. This is equivalent to that the first device does not send a signal in the first geographic area. Therefore, there is no interference to a signal sent by the second device.

Optionally, with reference to the first aspect, when the first device is a non-terrestrial network device, and the second device is a terrestrial network device, that the first device performs interference avoidance in the first geographic area includes: The first device schedules, in the first geographic area by using a second frequency domain resource, a terminal device in a cell managed by the first device, where the second frequency domain resource is a frequency domain resource available to the first device, or the second frequency domain resource does not include a frequency domain resource available to the second device; the first device disables a signal in the first geographic area; or the first device does not send a signal in the first geographic area. It can be learned that interference avoidance is performed more accurately and effectively. In addition, the first device does not need to stagger, in another geographic area, a used frequency domain resource and a frequency domain resource used by another network device to avoid interference. This improves resource utilization. In addition, the first device disables the signal in the first geographic area; or the first device does not send a signal in the first geographic area. Therefore, there is no interference to a signal sent by the second device.

Optionally, with reference to the first aspect, when the first device is a terrestrial network device and the second device is a terrestrial network device, when the first device is a terrestrial network device and the second device is a non-terrestrial network device, when the first device is a non-terrestrial network device and the second device is a terrestrial network device, or when the first device and the second device are non-terrestrial network devices, the method further includes: The first device receives second indication information from the second device. The second indication information indicates a frequency domain resource available to the first device or the second device. It can be learned that the first device receives the second indication information from the second device, so that the first device can stagger, in the first geographic area, the frequency domain resource available to the first device and the frequency domain resource available to the second device.

Optionally, with reference to the first aspect, when the first device is a non-terrestrial network device and the second device is an OAM device, that the first device performs interference avoidance in the first geographic area includes: The first device schedules, in the first geographic area by using a third frequency domain resource, a terminal device in a cell managed by the first device, where the third frequency domain resource is a frequency domain resource available to the first device, or the third frequency domain resource does not include a frequency domain resource available to a network device managed by the second device; the first device disables a signal in the first geographic area; or the first device does not send a signal in the first geographic area. It can be learned that interference avoidance is performed more accurately and effectively. In addition, the first device does not need to stagger, in another geographic area, a used frequency domain resource and a frequency domain resource used by another network device to avoid interference. This improves resource utilization. In addition, the first device disables the signal in the first geographic area; or the first device does not send a signal in the first geographic area. Therefore, there is no interference to a signal sent by the second device.

Optionally, with reference to the first aspect, when the first device is a non-terrestrial network device and the second device is an OAM device, the method further includes: The first device receives third indication information from the second device. The third indication information indicates the frequency domain resource available to the first device or the frequency domain resource available to the network device managed by the second device. It can be learned that the first device receives the third indication information from the second device, so that the first device can stagger, in the first geographic area, the frequency domain resource available to the first device and the frequency domain resource available to the network device managed by the second device.

Optionally, with reference to the first aspect, when the first device is a terrestrial network device or a non-terrestrial network device, and the second device is a terminal device, that the first device performs interference avoidance in the first geographic area includes: The first device schedules, in the first geographic area by using a fourth frequency domain resource, a terminal device in a cell managed by the first device, where the fourth frequency domain resource is a frequency domain resource reserved for the second device; the first device disables a signal in the first geographic area; or the first device does not send a signal in the first geographic area. It can be learned that interference avoidance is performed more accurately and effectively. In addition, the first device does not need to stagger, in another geographic area, a used frequency domain resource and a frequency domain resource used by another network device to avoid interference. This improves resource utilization. In addition, the first device disables the signal in the first geographic area; or the first device does not send a signal in the first geographic area. Therefore, there is no interference to a signal sent by the second device.

Optionally, with reference to the first aspect, the method further includes: The first device receives fourth indication information from the second device. The fourth indication information indicates a frequency domain resource reserved by the second device. It can be learned that the first device receives the fourth indication information from the second device, so that the first device may not use the resource reserved by the second device in the first geographic area, to schedule the terminal device in the cell managed by the first device.

According to a second aspect, an interference avoidance method is provided. The method includes: A second device sends first indication information to a first device. The first indication information indicates a first geographic area, and the first geographic area overlaps with a geographic area covered by the first device.

Optionally, with reference to the second aspect, when the first device is a terrestrial network device or a non-terrestrial network device, and the second device is a terrestrial network device; or when the first device and the second device are non-terrestrial network devices, the method further includes: If the second device detects a synchronization signal from the first device, the second device determines that a geographic area covered by a cell managed by the first device overlaps with a geographic area covered by a cell managed by the second device; if the second device detects that a signal strength of a synchronization signal from the first device is greater than a preset threshold, the second device determines that a geographic area covered by a cell managed by the first device overlaps with a geographic area covered by a cell managed by the second device; or the second device receives fifth indication information from a terminal device accessing the second device. The fifth indication information indicates that the geographic area covered by the cell managed by the first device overlaps with the geographic area covered by the cell managed by the second device. It can be learned that the second device may determine that the geographic area covered by the cell managed by the first device overlaps with the geographic area covered by the cell managed by the second device, so that the second device can be triggered to report the first indication information to the first device, and the first device can perform interference avoidance based on a geographic area indicated by the first indication information.

Optionally, with reference to the second aspect, when the first device is a non-terrestrial network device and the second device is an OAM device, the method further includes: The second device determines, based on location information of a network device managed by the second device and a geographic area covered by a cell managed by the first device, that the geographic area covered by the cell managed by the first device overlaps with a geographic area covered by a cell corresponding to the second device. The cell corresponding to the second device is a cell covered by the network device managed by the second device. It can be learned that the second device may determine that the geographic area covered by the cell managed by the first device overlaps with the geographic area covered by the cell corresponding to the second device, so that the second device can be triggered to report the first indication information to the first device, and the first device can perform interference avoidance based on a geographic area indicated by the first indication information.

Optionally, with reference to the second aspect, when the first device is a non-terrestrial network device or a terrestrial network device, and the second device is a terminal device, the method further includes: If the second device detects a synchronization signal from the first device, the second device determines that a geographic area covered by a cell managed by the first device overlaps with a geographic area covered by a cell accessed by the second device; or if the second device detects that a signal strength of a synchronization signal from the first device is greater than a preset threshold, the second device determines that a geographic area covered by a cell managed by the first device overlaps with a geographic area covered by a cell accessed by the second device. It can be learned that the second device may determine that the geographic area covered by the cell managed by the first device overlaps with the geographic area covered by the cell accessed by the second device, so that the second device can be triggered to report the first indication information to the first device, and the first device can perform interference avoidance based on a geographic area indicated by the first indication information.

Optionally, with reference to the second aspect, when the first device is a terrestrial network device and the second device is a terrestrial network device, when the first device is a terrestrial network device and the second device is a non-terrestrial network device, when the first device is a non-terrestrial network device and the second device is a terrestrial network device, or when the first device and the second device are non-terrestrial network devices, the method further includes: The second device sends second indication information to the first device. The second indication information indicates a frequency domain resource available to the first device or the second device.

Optionally, with reference to the second aspect, when the first device is a non-terrestrial network device and the second device is an OAM device, the method further includes: The second device sends third indication information to the first device. The third indication information indicates a frequency domain resource available to the first device or a frequency domain resource available to a network device managed by the second device.

Optionally, with reference to the second aspect, when the first device is a terrestrial network device and the second device is a terminal device; or when the first device is a non-terrestrial network device and the second device is a terminal device, the method further includes: The second device sends fourth indication information to the first device. The fourth indication information indicates a frequency domain resource reserved by the second device.

Optionally, with reference to the first aspect or the second aspect, the first device is a terrestrial network device, and the second device is a terrestrial network device; the first device is a terrestrial network device, and the second device is a non-terrestrial network device; the first device is a non-terrestrial network device, and the second device is a terrestrial network device; the first device is a non-terrestrial network device, and the second device is a non-terrestrial network device; the first device is a non-terrestrial network device, and the second device is an OAM device; the first device is a terrestrial network device, and the second device is a terminal device; or the first device is a non-terrestrial network device, and the second device is a terminal device.

Optionally, with reference to the first aspect or the second aspect, the first geographic area is an overlapping area between the geographic area covered by the cell managed by the first device and the geographic area covered by the cell managed by the second device; or the first geographic area is the geographic area covered by the cell managed by the second device. It can be learned that the first device performs interference avoidance in the first geographic area. This implements interference avoidance more accurately and effectively. In addition, the first device does not need to stagger, in another geographic area, a used frequency domain resource and a frequency domain resource used by another network device to avoid interference. This improves resource utilization.

Optionally, with reference to the first aspect or the second aspect, the first indication information includes one or more of the following: location information of the second device, location information of a terminal device accessing the second device, and information about a geographic area covered by a beam of the second device. It can be learned that after the second device reports the first indication information, the first device can determine the first geographic area based on the first indication information and perform interference avoidance in the first geographic area. This implements interference avoidance more accurately and effectively. In addition, the first device does not need to stagger, in another geographic area, a used frequency domain resource and a frequency domain resource used by another network device to avoid interference. This improves resource utilization.

Optionally, with reference to the first aspect or the second aspect, the first indication information further indicates that the cell managed by the first device and the cell managed by the second device are intra-frequency cells or adjacent-frequency cells. It can be learned that the first device may further learn that the cell managed by the first device and the cell managed by the second device are intra-frequency cells or adjacent-frequency cells.

Optionally, with reference to the first aspect or the second aspect, the first geographic area is an overlapping area between the geographic area covered by the cell managed by the first device and the geographic area covered by the cell corresponding to the second device; or the first geographic area is the geographic area covered by the cell corresponding to the second device. The cell corresponding to the second device is a cell covered by the network device managed by the second device. It can be learned that the first device performs interference avoidance in the first geographic area. This implements interference avoidance more accurately and effectively. In addition, the first device does not need to stagger, in another geographic area, a used frequency domain resource and a frequency domain resource used by another network device to avoid interference. This improves resource utilization.

Optionally, with reference to the first aspect or the second aspect, the first indication information includes one or more of the following: location information of a network device managed by the second device, location information of a terminal device accessing the network device, and information about a geographic area covered by a beam of the network device. It can be learned that after the second device reports the first indication information, the first device can perform interference avoidance in the first geographic area. This implements interference avoidance more accurately and effectively. In addition, the first device does not need to stagger, in another geographic area, a used frequency domain resource and a frequency domain resource used by another network device to avoid interference. This improves resource utilization.

Optionally, with reference to the first aspect or the second aspect, the first indication information further indicates that the cell managed by the first device and the cell corresponding to the second device are intra-frequency cells or adjacent-frequency cells. The cell corresponding to the second device is a cell covered by the network device managed by the second device. It can be learned that the first device may further learn that the cell managed by the first device and the cell corresponding to the second device are intra-frequency cells or adjacent-frequency cells.

Optionally, with reference to the first aspect or the second aspect, the first geographic area is an overlapping area between the geographic area covered by the cell managed by the first device and the geographic area covered by the cell accessed by the second device; or the first geographic area is the geographic area covered by the cell accessed by the second device. It can be learned that the first device performs interference avoidance in the first geographic area. This implements interference avoidance more accurately and effectively. In addition, the first device does not need to stagger, in another geographic area, a used frequency domain resource and a frequency domain resource used by another network device to avoid interference. This improves resource utilization.

Optionally, with reference to the first aspect or the second aspect, the first indication information includes location information of the second device. It can be learned that the second device may report the first indication information, so that the first device can determine the first geographic area based on the first indication information and perform interference avoidance in the first geographic area. This implements interference avoidance more accurately and effectively. In addition, the first device does not need to stagger, in another geographic area, a used frequency domain resource and a frequency domain resource used by another network device to avoid interference. This improves resource utilization.

Optionally, with reference to the first aspect or the second aspect, the first indication information further indicates that the cell managed by the first device and the cell accessed by the second device are intra-frequency cells or adjacent-frequency cells. It can be learned that the first device may further learn that the cell managed by the first device and the cell accessed by the second device are intra-frequency cells or adjacent-frequency cells.

According to a third aspect, a network device is provided, including a module or a unit configured to perform the method according to any implementation of the first aspect.

According to a fourth aspect, a network device is provided, including a module or a unit configured to perform the method according to any implementation of the second aspect.

According to a fifth aspect, a communication apparatus is provided, including a processor and a memory. The processor invokes a computer program stored in the memory to implement the method according to any one of the first aspect or the second aspect.

In a possible design, the communication apparatus may be a chip or a device including a chip implementing the method in the first aspect or the second aspect.

According to a sixth aspect, a computer-readable storage medium is provided. The computer-readable storage medium stores a computer program, and when the computer program is run, the method according to any one of the first aspect or the second aspect is implemented.

According to a seventh aspect, a computer program product including instructions is provided. When the computer program product runs on a computer, the method according to any one of the first aspect or the second aspect is performed.

According to an eighth aspect, a communication system is provided. The communication system includes one or more of the following: a first device that performs the method according to any implementation of the first aspect, and a second device that performs the method according to any implementation of the second aspect.

### BRIEF DESCRIPTION OF DRAWINGS

The following briefly describes accompanying drawings used in describing embodiments.

The details are as follows:
FIG. 1 shows a basic architecture of a communication system according to an embodiment of this application;
FIG. 2 is a diagram of NTN-device-based RAN architectures to which an embodiment of this application is applicable;
FIG. 3 is a diagram of a structure of a RAN in which a CU and a DU are split to which an embodiment of this application is applicable;
FIG. 4 is a diagram of a hardware structure of a communication apparatus applicable to an embodiment of this application;
FIG. 5 is a schematic flowchart of an interference avoidance method according to an embodiment of this application;
FIG. 6 is a diagram of a structure of a network device according to an embodiment of this application;
FIG. 7 is a diagram of a structure of a simplified terminal device according to an embodiment of this application; and
FIG. 8 is a diagram of a structure of a simplified terrestrial network device according to an embodiment of this application.

### DESCRIPTION OF EMBODIMENTS

The following describes technical solutions in embodiments of this application with reference to accompanying drawings in embodiments of this application. Terms "system" and "network" may be used interchangeably in embodiments of this application. "I" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe technical solutions in embodiments of this application, terms such as "first" and "second" are used in embodiments of this application to distinguish between same items or similar items that have basically same network elements or purposes. A person skilled in the art may understand that terms such as "first" and "second" do not limit a quantity and an execution sequence, and the terms such as "first" and "second" do not indicate a definite difference.

Terms "include", "comprise", "have", and their variants all mean "include but are not limited to", unless otherwise specifically emphasized in another manner.

Objectives, technical solutions, and beneficial effect of this application are further described in detail in the following specific implementations. It should be understood that the following descriptions are merely specific implementations of this application, but are not intended to limit the protection scope of this application. Any modification, equivalent replacement, or improvement made based on technical solutions of this application shall fall within the protection scope of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The following describes some terms involved in this application. It may be understood that when the following nouns are used in other parts of this application, no explanation or description is provided subsequently.

Interference avoidance (interference avoidance) may be replaced with interference management (interference management), interference coordination (interference coordination), radio resource management (radio resource management), or the like. This is not limited herein.

It should be understood that the technical solutions in embodiments of this application may be applied to long term evolution (long term evolution, LTE), a 5th generation mobile communication technology (5th generation mobile networks technology, 5G), and the like. The technical solutions in embodiments of this application may be further applied to another future communication system, for example, a 6G communication system. In the future communication system, a same function may be maintained, but a name may be changed.

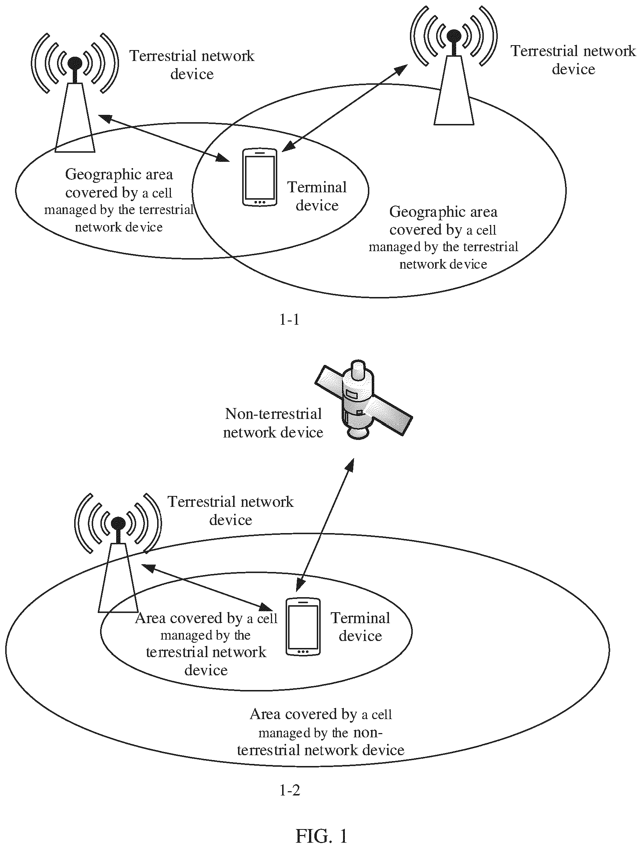

The following describes a basic architecture of a communication system provided in embodiments of this application. FIG. 1 shows a basic architecture of a communication system according to an embodiment of this application. As shown in FIG. 1, in 1-1 in FIG. 1, the communication system may include a plurality of terrestrial network (terrestrial network, TN) devices and at least one terminal device (only one terminal device is shown in 1-1 in FIG. 1). One terrestrial network device may communicate with one or more terminal devices. In addition, coverage geographic areas of cells managed by different terrestrial network devices may partially or completely overlap. For example, in 1-1 in FIG. 1, coverage geographic areas of cells managed by two terrestrial network devices may partially overlap. In 1-2 in FIG. 1, the communication system may include a non-terrestrial network (non-terrestrial network, NTN) device, a terrestrial network device, and a terminal device. The non-terrestrial network device may communicate with the terminal device, and the terrestrial network device may communicate with the terminal device. A geographic area covered by a cell managed by the non-terrestrial network device may partially or completely overlap with a geographic area covered by a cell managed by the terrestrial network device. For example, in 1-2 in FIG. 1, the geographic area covered by the cell managed by the non-terrestrial network device may completely overlap with the geographic area covered by the cell managed by the terrestrial network device. It may be understood that FIG. 1 is merely a diagram, and does not constitute a limitation on an application scenario of the technical solutions provided in this application.

The non-terrestrial network device provides a wireless access service for the terminal device, schedules a radio resource for the accessed terminal device, and provides a reliable wireless transmission protocol, a reliable data encryption protocol, and the like. The non-terrestrial network device may be a base station used for wireless communication, such as an artificial earth satellite and a high-altitude aircraft, for example, a medium earth orbit (medium earth orbit, MEO) satellite or a low earth orbit (low earth orbit, LEO) satellite of a non-geostationary earth orbit (non-geostationary earth orbit, NGEO), a high altitude platform station (High Altitude Platform Station, HAPS), an evolved NodeB (evolved NodeB, eNB), or a 5G base station (gNB). The non-terrestrial network device may also have a relay forwarding function, and transparently transmit (transparent) a wireless signal to the terminal device.

The terrestrial network device is an entity configured to send and/or receive a signal on a network side. The terrestrial network device may be an apparatus that is deployed in a radio access network (radio access network, RAN) and that provides a wireless communication function for the terminal device, for example, may be a transmission reception point (transmission reception point, TRP), a base station, or control nodes in various forms, such as a network controller, a radio controller, and a radio controller in a cloud radio access network (cloud radio access network, CRAN) scenario. Specifically, the terrestrial network device may be a macro base station, a micro base station (also referred to as a small cell), a relay station, an access point (access point, AP), a radio network controller (radio network controller, RNC), a nodeB (nodeB, NB), a base station controller (base station controller, BSC), a base transceiver station (base transceiver station, BTS), a home base station (for example, a home evolved nodeB, or a home nodeB, HNB), a baseband unit (baseband unit, BBU), a transmitting and receiving point (transmitting and receiving point, TRP), a transmitting point (transmitting point, TP), a mobile switching center, and the like in various forms, or may be an antenna panel of the base station. The control node may be connected to a plurality of base stations, and configure resources for a plurality of terminals covered by the plurality of base stations. In systems using different radio access technologies, names of devices having a base station function may be different. For example, the terrestrial network device may be a base station device in 5G, a network side device in a network after 5G, or a terrestrial network device in a future evolved PLMN network. A specific name of the terrestrial network device is not limited in this application. The terrestrial network device may be configured to connect a non-terrestrial network device to a core network device. For example, when the non-terrestrial network device is used as a base station for wireless communication, the terrestrial network device may transparently transmit signaling and data between the non-terrestrial network device and the core network device. Alternatively, the terrestrial network device may be used as a base station for wireless communication, and the non-terrestrial network device may transparently transmit signaling and data between the terminal device and the terrestrial network device. For example, the terrestrial network device may send signaling from the core network device to the non-terrestrial network device through a feedback link (or referred to as a feeder link) (feeder link), and the non-terrestrial network device sends the signaling to the terminal device through a service link (service link) between the non-terrestrial network device and the terminal device. Correspondingly, the terminal device may alternatively send signaling to the non-terrestrial network device through the service link, and the non-terrestrial network device sends the signaling to the core network device by using the terrestrial network device. In addition, in a possible implementation, the terrestrial network device may communicate with the non-terrestrial network device by using a detection module. The detection module may be integrated in the terrestrial network device, or may be independent of the terrestrial network device (for example, the detection module may be deployed near the terrestrial network device). In still another possible implementation, the terrestrial network device may communicate with the terminal device by using the non-terrestrial network device.

The terminal device is an entity that is on a user side and that is configured to send and/or receive a signal. The terminal device is configured to provide one or more of a voice service and a data connectivity service for a user. The terminal device may be a device that includes a wireless transceiver function and that can cooperate with the terrestrial network device to provide a communication service for the user. Specifically, the terminal device may be user equipment (user equipment, UE), an access terminal, a subscriber unit, a subscriber station, a mobile station, a remote station, a remote terminal, a mobile device, a terminal, a wireless communication device, a user agent, or a user apparatus. The terminal device may alternatively be an uncrewed aerial vehicle, an internet of things (internet of things, IoT) device, a station (station, ST) in a WLAN, a cellular phone (cellular phone), a smart phone (smart phone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, a wearable device (also referred to as a wearable intelligent device), a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a device-to-device (device-to-device, D2D) device, for example, an electricity meter or a water meter. A type of the terminal device is not limited in this embodiment of this application.

In addition, the communication system shown in FIG. 1 may further include a core network device and an operations, administration, and maintenance (operations, administration, and maintenance, OAM) device (not shown in FIG. 1). The core network device may be a device in a core network (core network, CN) that provides service support for the terminal device. The core network device may be a core network device in LTE, or may be a core network device in 5G, or may be a core network device in another communication system. This is not limited herein. The OAM device may store at least one of the following: an ephemeris map of the non-terrestrial network device, location information of the terrestrial network device, a frequency used by the non-terrestrial network device, a frequency used by the terrestrial network device, and the like. The ephemeris map may represent a movement track of the non-terrestrial network device, and location information of the non-terrestrial network device at a moment may be determined based on the ephemeris map. It should be understood that the OAM device may be an OAM device that manages the non-terrestrial network device or an OAM device that manages the terrestrial network device. The OAM device that manages the non-terrestrial network device and the OAM device that manages the terrestrial network device may be a same device or different devices. This is not limited herein.

The following describes five NTN-device-based RAN architectures by using an example in which a non-terrestrial network device is a satellite.

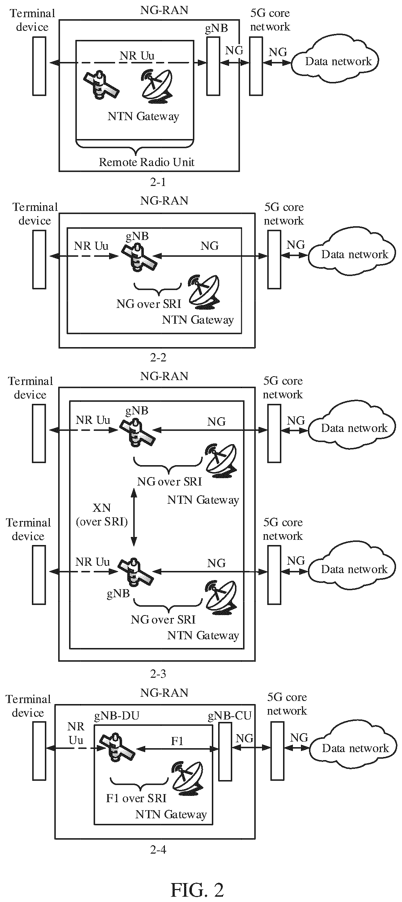

FIG. 2 is a diagram of NTN-device-based RAN architectures to which an embodiment of this application is applicable. As shown in FIG. 2, the NTN-based RAN architectures may include UE, a RAN, a 5G CN, and a data network (data network, DN).

The architecture shown in 2-1 in FIG. 2 is a RAN architecture with transparent satellite (RAN architecture with transparent satellite). The RAN may include a remote radio unit (remote radio unit, RRU) and a gNB. The RRU may include a satellite and an NTN gateway (gateway). The UE may access the gNB by using the satellite and the NTN gateway. In a transparent (transparent) scenario, the satellite is used for radio frequency filtering (radio frequency filtering) and frequency conversion and amplification (frequency conversion and amplification), to ensure that a waveform signal with repeated payloads remains unchanged (the waveform signal repeated by the payload is unchanged). To be specific, the satellite is mainly used as a relay device at an L1 layer (L1 relay) for regenerating a physical layer signal, and the physical layer signal is invisible to a higher layer.

A regenerative (regenerative) satellite in the architecture shown in 2-2 in FIG. 2 does not have an inter-satellite link (inter-satellite link, ISL), and the gNB processes the payload. The RAN includes a gNB and an NTN gateway, and a satellite is used as a gNB. The satellite is connected to the NTN gateway through a satellite radio interface (satellite radio interface, SRI).

A regenerative satellite in the architecture shown in 2-3 in FIG. 2 has an ISL, and the gNB processes the payload. In this scenario, the satellite is used as the gNB. A difference from the architecture shown in 2-2 in FIG. 2 is that an ISL exists in this scenario.

ARAN in the architecture shown in 2-4 in FIG. 2 includes a distributed unit (distributed unit, DU) and a central unit (central unit, CU), and a satellite is used as the DU. The CU and the DU may jointly complete functions of a base station, and functions of the CU and the DU may be classified based on a protocol layer of a wireless network. For example, the CU completes functions of a radio resource control protocol and a packet data convergence protocol (packet data convergence protocol, PDCP) of a base station, and may further complete functions of a service data adaptation protocol (service data adaptation protocol, SDAP). The DU completes functions of a radio link control (radio link control, RLC) layer and a medium access control (medium access control, MAC) layer of a base station, and may further complete functions of some physical layers or all physical layers.

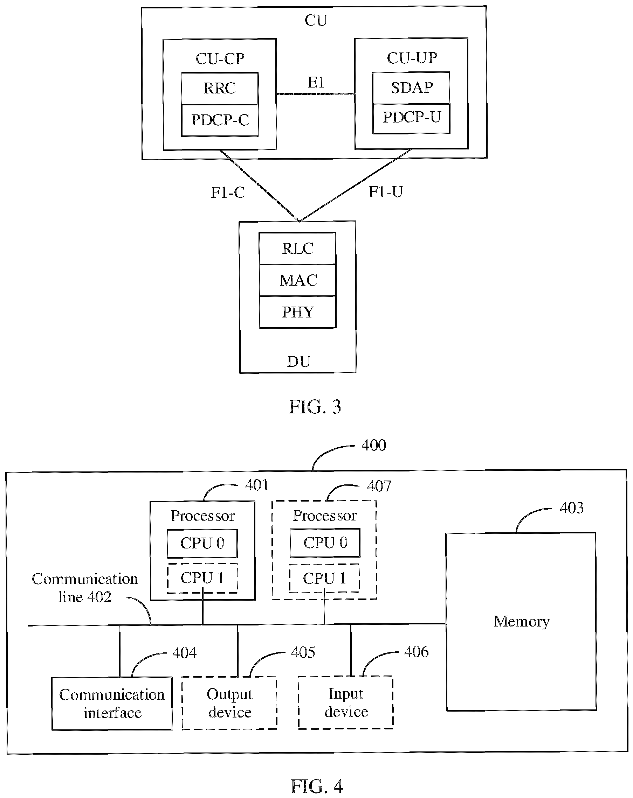

FIG. 3 is a diagram of a structure of a base station in which a CU and a DU are split to which an embodiment of this application is applicable. As shown in FIG. 3, the CU is divided into a CU control plane (CU control plane, CU-CP) unit and a CU user plane (CU user plane, CU-UP) unit. The CU-CP is responsible for a control plane function, and mainly includes an RRC function and a PDCP function corresponding to the control plane, that is, PDCP-C. The CU-UP is responsible for a user plane function, and mainly includes an SDAP function and a PDCP function corresponding to the user plane, that is, PDCP-U. The CU-CP and the CU-UP may be connected through an E1 interface, the CU-CP and the DU may be connected through an F1-C interface, and the CU-UP and the DU may be connected through an F1-U interface.

In another NTN-based RAN device architecture, the satellite has a gNB processed payload based on relay-like architectures (gNB processed payload based on relay-like architectures). The satellite is used as integrated access and backhaul (integrated access and backhaul, IAB).

Optionally, the non-terrestrial network device, the terrestrial network device, the terminal device, and the like in FIG. 1 may be separately implemented by one device, or may be jointly implemented by a plurality of devices, or may be implemented by a functional module in one device. This is not specifically limited in embodiments of this application. It may be understood that the foregoing functions may be network elements in a hardware device, or may be software functions running on dedicated hardware, or may be virtualization functions instantiated on a platform (for example, a cloud platform).

For example, each device in FIG. 1 may be implemented by a communication apparatus 400 in FIG. 4. FIG. 4 is a diagram of a hardware structure of a communication apparatus applicable to an embodiment of this application. The communication apparatus 400 includes at least one processor 401, a communication line 402, a memory 403, and at least one communication interface 404.

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a channel for transmitting information between the foregoing components.

The communication interface 404 is any apparatus (such as an antenna) similar to a transceiver, and is configured to communicate with another device or communication network, for example, the Ethernet, a RAN, or a wireless local area network (wireless local area network, WLAN).

The memory 403 may be a read-only memory (read-only memory, ROM) or another type of static storage device that can store static information and instructions, or a random access memory (random access memory, RAM) or another type of dynamic storage device that can store information and instructions. Alternatively, the memory 403 may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory 403 is not limited thereto. The memory may exist independently, and is connected to the processor through the communication line 402. The memory may alternatively be integrated with the processor. The memory provided in embodiments of this application may be usually non-volatile. The memory 403 is configured to store computer-executable instructions for performing the solutions in this application, and the processor 401 controls execution. The processor 401 is configured to execute the computer-executable instructions stored in the memory 403, to implement methods provided in the following embodiments of this application.

Optionally, the computer-executable instructions in this embodiment of this application may also be referred to as application program code. This is not specifically limited in this embodiment of this application.

In a possible implementation, the processor 401 may include one or more CPUs, such as a CPU 0 and a CPU 1 in FIG. 4.

In a possible implementation, the communication apparatus 400 may include a plurality of processors, such as the processor 401 and a processor 407 in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 400 may further include an output device 405 and an input device 406. The output device 405 communicates with the processor 401, and may display information in a plurality of manners. For example, the output device 405 may be a liquid crystal display (liquid crystal display, LCD), a light emitting diode (light emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensor device.

The communication apparatus 400 may be a general-purpose device or a dedicated device. During specific implementation, the communication apparatus 400 may be a portable computer, a network server, a personal digital assistant (personal digital assistant, PDA), a mobile phone, a tablet computer, a wireless terminal device, an embedded device, or a device having a structure similar to that in FIG. 4. A type of the communication apparatus 400 is not limited in this embodiment of this application.

After the communication apparatus is powered on, the processor 401 may read a software program in the memory 403, interpret and execute instructions of the software program, and process data of the software program. When data needs to be sent wirelessly, the processor 401 performs baseband processing on to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 401; and the processor 401 converts the baseband signal into data, and processes the data.

In another implementation, the radio frequency circuit and the antenna may be disposed independently of the processor for baseband processing. For example, in a distributed scenario, the radio frequency circuit and the antenna may be disposed remotely independent of the communication apparatus.

The following describes the technical solutions provided in embodiments of this application with reference to the accompanying drawings. It should be understood that in embodiments shown in this application, types of a first device and a second device may be any one of the following manners. This is not limited herein.

Manner 1.1: The first device is a terrestrial network device, and the second device is a terrestrial network device; the first device is a terrestrial network device, and the second device is a non-terrestrial network device; the first device is a non-terrestrial network device, and the second device is a terrestrial network device; or the first device is a non-terrestrial network device, and the second device is a non-terrestrial network device.

Manner 1.2: The first device is a non-terrestrial network device, and the second device is an OAM device. The OAM device may manage a network device, and the network device may be the first device or a terrestrial network device.

Manner 1.3: The first device is a terrestrial network device, and the second device is a terminal device; or the first device is a non-terrestrial network device, and the second device is a terminal device. The second device may further access a terrestrial network device or a non-terrestrial network device other than the first device.

The following describes the interference avoidance method provided in this application by using an example in which the terrestrial network device is a base station and the non-terrestrial network device is a satellite.

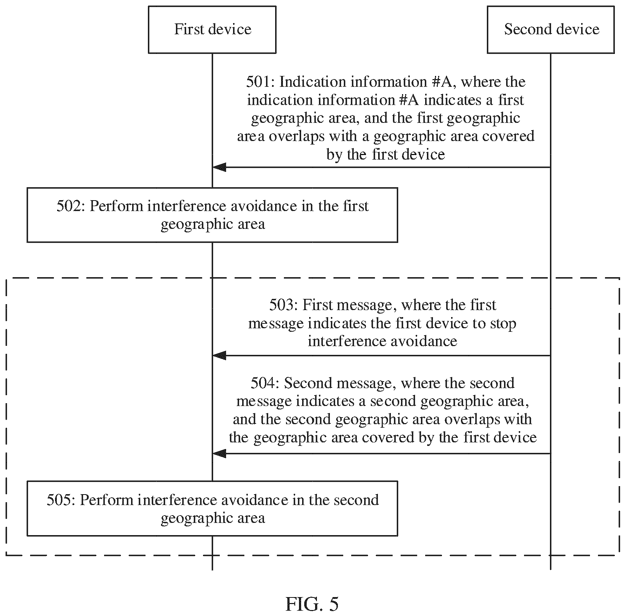

FIG. 5 is a schematic flowchart of an interference avoidance method according to an embodiment of this application. As shown in FIG. 5, the method includes but is not limited to the following steps.

501: A second device sends indication information #A to a first device, where the indication information #A indicates a first geographic area, and the first geographic area overlaps with a geographic area covered by the first device.

Correspondingly, the first device receives the indication information #A from the second device.

That the first geographic area overlaps with the geographic area covered by the first device may be understood as that the first geographic area partially or completely overlaps with the geographic area covered by the first device. This is not limited herein.

Optionally, specific information included in the indication information #A is related to types of the first device and the second device. The following Manner 2.1 to Manner 2.3 are examples for describing the indication information #A.

Manner 2.1: When the first device is a base station or a satellite and the second device is a base station, when the first device is a base station and the second device is a satellite, or when the first device and the second device are satellites, the indication information #A includes one or more of the following: location information of the second device, location information of a terminal device accessing the second device, or information about a geographic area covered by a beam of the second device. When the indication information #A includes the location information of the second device, the first geographic area includes the location information of the second device. In an example, the location information of the second device may be geographic location information of the second device, for example, longitude and latitude coordinates of the second device. In another example, the location information of the second device may be geographic area information of the second device, for example, longitude and latitude coordinate interval values that include longitude and latitude coordinates of the second device. When the indication information #A includes the location information of the terminal device accessing the second device, the first geographic area includes the location information of the terminal device. In an example, the location information of the terminal device accessing the second device may be geographic location information of the terminal device accessing the second device, for example, longitude and latitude coordinates of the terminal device. In another example, the location information of the terminal device may be geographic area information of the terminal device, for example, longitude and latitude coordinate interval values that include longitude and latitude coordinates of the terminal device. Optionally, there may be one or more terminal devices. This is not limited herein. Optionally, when there are a plurality of terminal devices, the first device may obtain the first geographic area based on location information of the plurality of terminal devices. For example, a geographic area identified by longitude and latitude coordinates of the plurality of terminal devices is used as the first geographic area. The information about the geographic area covered by the beam of the second device may be determined based on the location information of the terminal device accessing the second device. When the indication information #A includes the information about the geographic area covered by the beam of the second device, after the first device receives the indication information #A, the first device may determine, based on the indication information #A, that the first geographic area is the geographic area covered by the beam of the second device.

Manner 2.2: When the first device is a satellite and the second device is an OAM device, the indication information #A includes one or more of the following: location information of a network device managed by the OAM device, location information of a terminal device accessing the network device managed by the OAM device, and information about a geographic area covered by a beam of the network device managed by the OAM device. For a relationship between the indication information #A and the first geographic area in Manner 2.2, refer to similar descriptions in Manner 2.1.

Manner 2.3: When the first device is a base station or a satellite, and the second device is a terminal device, the indication information #A includes location information of the second device. The terminal device may access another base station or satellite other than the first device, to receive a message from the another base station or satellite. The message indicates the terminal device to send location information of the terminal device to the first device. It should be understood that, after receiving the message, the terminal device may send, to the first device, the indication information #A that includes the location information of the second device. In addition, the message may include a frequency domain resource that can be used by the another base station or satellite. After receiving the message, the second device may further send indication information #B to the first device. The indication information #B indicates a frequency domain resource reserved by the terminal device, and the frequency domain resource reserved by the terminal device may be determined based on the frequency domain resource that can be used by the another base station or satellite. It should be noted that there may be one or more terminal devices. This is not limited herein. For example, one terminal device may be a terminal device at a central location in a geographic area covered by another base station, and another terminal device may be a terminal device at an edge location in a geographic area covered by the another base station. This is not limited herein.

Optionally, before step 501, a manner in which the second device reports the indication information #A to the first device, and the first device performs interference avoidance based on the geographic area indicated by the indication information #A includes any one of the following manners. This is not limited herein.

Manner 3.1: When the first device is a base station or a satellite and the second device is a base station, or when the first device is a base station and the second device is a satellite, or when the first device and the second device are satellites, after the second device determines that a geographic area covered by a cell managed by the first device overlaps with a geographic area covered by a cell managed by the second device, or after the second device receives location information of a terminal device accessing the second device, for example, after determining that the geographic area covered by the cell managed by the first device overlaps with a geographic area corresponding to the location information of the terminal device, the second device may perform step 501. In an example, the location information of the terminal device accessing the second device may be geographic location information of the terminal device, for example, longitude and latitude coordinates of the terminal device. In another example, the location information of the terminal device accessing the second device may be geographic area information of the terminal device, a geographic location of the terminal is located in the geographic area, and the geographic area information may be represented by longitude and latitude coordinate interval values that include longitude and latitude coordinates of the terminal device.

Manner 3.2: When the first device is a satellite, and the second device is an OAM device, the second device may perform step 501 after determining that a geographic area covered by a cell managed by the first device overlaps with a geographic area covered by a cell corresponding to the second device. The cell corresponding to the second device is a cell covered by a network device managed by the second device, and the network device may be a satellite or a base station.

Manner 3.3: When the first device is a base station or a satellite, and the second device is a terminal device, the second device may perform step 501 after determining that a geographic area covered by a cell managed by the first device overlaps with a geographic area covered by a cell accessed by the second device. The cell accessed by the second device may be understood as a cell that is managed by a base station or a satellite other than the first device and that is accessed by the second device.

When the first device is a base station or a satellite, and the second device is a base station, when the first device is a base station and the second device is a satellite, or when the first device and the second device are satellites, for Manner 3.1, that the second device determines that the geographic area covered by the cell managed by the first device overlaps with the geographic area covered by the cell managed by the second device may be specifically implemented in any one of the following manners. This is not limited herein.

Manner 4.1: If the second device detects a synchronization signal from the first device, the second device determines that the geographic area covered by the cell managed by the first device overlaps with the geographic area covered by the cell managed by the second device.

Manner 4.2: If the second device detects that a signal strength of a synchronization signal from the first device is greater than a preset threshold, the second device determines that the geographic area covered by the cell managed by the first device overlaps with the geographic area covered by the cell managed by the second device. The preset threshold is predefined in a protocol or configured by a network. This is not limited herein.

Manner 4.3: The second device receives indication information #C from the terminal device accessing the second device. The indication information #C indicates that the geographic area covered by the cell managed by the first device overlaps with the geographic area covered by the cell managed by the second device. Alternatively, the indication information #C indicates a cell list detected by the terminal device accessing the second device. For example, the cell list includes an identifier of the first device, or the cell list includes a cell identifier of the cell managed by the first device. It should be understood that when the indication information #C indicates the cell list detected by the terminal device, the second device may determine, based on the cell list, that the terminal device detects the cell managed by the first device, to determine that the terminal device is located in an overlapping area between the cell managed by the first device and the cell managed by the second device, that is, the geographic area covered by the cell managed by the first device overlaps with the geographic area covered by the cell managed by the second device.

For Manner 4.1 or Manner 4.2, the second device may further determine that the cell managed by the first device and the cell managed by the second device are intra-frequency cells or adjacent-frequency cells. For example, the first device is a satellite and the second device is a base station. The base station may detect a synchronization signal from the satellite on a frequency, and the frequency is a frequency used by the satellite. Therefore, the second device may determine, based on the frequency used by the satellite and a frequency used by the base station, that a cell managed by the satellite and a cell managed by the base station are intra-frequency cells or adjacent-frequency cells. Specifically, in an example, the frequency used by the satellite is the same as the frequency used by the base station, and the cell managed by the satellite and the cell managed by the base station are intra-frequency cells. In another example, the frequency used by the satellite is different from the frequency used by the base station, a difference between the frequency used by the satellite and the frequency used by the base station is less than a preset threshold, and the cell managed by the satellite and the cell managed by the base station are adjacent-frequency cells. The preset threshold is predefined in a protocol or configured by a network. This is not limited herein. It should be noted that, when the first device is a satellite and the second device is a base station, the base station may detect, through a detection module, a synchronization signal from the satellite on a frequency. The frequency is a frequency used by the satellite. Therefore, the detection module may learn of the frequency used by the satellite. That is, the base station may learn of the frequency used by the satellite, and may determine, based on the frequency used by the satellite and the frequency used by the base station, that the cell managed by the satellite and the cell managed by the base station are intra-frequency cells or adjacent-frequency cells.

Optionally, in an implementation of this application, when the indication information #C in Manner 4.3 indicates that the geographic area covered by the cell managed by the first device overlaps with the geographic area covered by the cell managed by the second device, before the second device receives the indication information #C from the terminal device accessing the second device, the terminal device may detect a synchronization signal from the first device. Therefore, the terminal device may determine, based on the synchronization signal, that the geographic area covered by the cell managed by the first device overlaps with the geographic area covered by the cell managed by the second device. Further, the terminal device may be triggered to send the indication information #C to the second device. In an example, if the terminal device detects the synchronization signal from the first device, the terminal device may determine that the geographic area covered by the cell managed by the first device overlaps with the geographic area covered by the cell managed by the second device, and send the indication information #C to the second device. In another example, if the terminal device detects that a signal strength of the synchronization signal from the first device is greater than a preset threshold, the terminal device may determine that the geographic area covered by the cell managed by the first device overlaps with the geographic area covered by the cell managed by the second device, and send the indication information #C to the second device. In addition, the terminal device may further determine that the cell managed by the first device and the cell managed by the second device are intra-frequency cells or adjacent-frequency cells. For a specific process, refer to content in which the second device determines that the cell managed by the first device and the cell managed by the second device are intra-frequency cells or adjacent-frequency cells. Details are not described herein again. It should be understood that, after the terminal device determines that the cell managed by the first device and the cell managed by the second device are intra-frequency cells, the indication information #C further indicates that the cell managed by the first device and the cell managed by the second device are intra-frequency cells. After the terminal device determines that the cell managed by the first device and the cell managed by the second device are adjacent-frequency cells, the indication information #C further indicates that the cell managed by the first device and the cell managed by the second device are adjacent-frequency cells.

Therefore, with reference to any one of Manner 4.1 and Manner 4.2, the indication information #A may further indicate that the cell managed by the first device and the cell managed by the second device are intra-frequency cells or adjacent-frequency cells. That is, after the second device determines that the cell managed by the first device and the cell managed by the second device are intra-frequency cells or adjacent-frequency cells, the OAM device may notify the first device via the indication information #A, so that the first device may learn that the cell managed by the first device and the cell managed by the second device are intra-frequency cells or adjacent-frequency cells.

When the first device is a satellite, and the second device is an OAM device, the OAM device may manage a plurality of network devices such as a satellite and/or a base station. For Manner 3.2, the second device may determine that the geographic area covered by the cell managed by the first device overlaps with the geographic area covered by the cell corresponding to the second device. Details are as follows: The second device determines, based on location information of the network device managed by the second device and the geographic area covered by the cell managed by the first device, that the geographic area covered by the cell managed by the first device overlaps with the geographic area covered by the cell corresponding to the second device. To be specific, the OAM device may determine, based on the location information of the network device managed by the OAM device and the geographic area covered by the cell managed by the first device, namely, the satellite, that the geographic area covered by the cell managed by the satellite overlaps with the geographic area covered by the cell corresponding to the OAM device. The geographic area covered by the cell managed by the satellite is an area determined by the satellite based on an ephemeris map of the satellite and a downtilt angle of an antenna corresponding to the cell managed by the satellite. The satellite may send the determined geographic area covered by the cell managed by the satellite to the OAM device. The ephemeris map of the satellite represents a movement track of the satellite, and location information of the satellite at a specific moment can be determined based on the ephemeris map. In addition, the second device stores a frequency of the first device and a frequency of the network device managed by the second device. Therefore, the second device may further determine that the cell managed by the first device and the cell corresponding to the second device are intra-frequency cells or adjacent-frequency cells. Specifically, in an example, a frequency used by the satellite is the same as a frequency used by the network device managed by the operations, administration, and maintenance device, and the cell managed by the satellite and the cell corresponding to the operations, administration, and maintenance device are intra-frequency cells. In another example, a frequency used by the satellite is different from a frequency used by the network device managed by the operations, administration, and maintenance device, and a difference between the frequency used by the satellite and the frequency used by the network device managed by the operations, administration, and maintenance device is less than a preset threshold. The cell managed by the satellite and the cell corresponding to the operations, administration, and maintenance device are adjacent-frequency cells. Therefore, the indication information #A may further indicate that the cell managed by the first device and the cell corresponding to the second device are intra-frequency cells or adjacent-frequency cells. To be specific, after the OAM device determines that the cell managed by the satellite and the cell corresponding to the OAM device are intra-frequency cells or adjacent-frequency cells, the OAM device may notify the satellite via the indication information #A, so that the satellite may learn that the cell managed by the satellite and the cell corresponding to the OAM device are intra-frequency cells or adjacent-frequency cells.

When the first device is a base station or a satellite, and the second device is a terminal device, for Manner 3.3, that the second device may determine that the geographic area covered by the cell managed by the first device overlaps with the geographic area covered by the cell accessed by the second device may be implemented in any one of the following manners. This is not limited herein.

Manner 5.1: If the second device detects a synchronization signal from the first device, the second device determines that the geographic area covered by the cell managed by the first device overlaps with the geographic area covered by the cell accessed by the second device.

Manner 5.2: If the second device detects that a signal strength of a synchronization signal from the first device is greater than a preset threshold, the second device determines that the geographic area covered by the cell managed by the first device overlaps with the geographic area covered by the cell accessed by the second device.

In addition, for Manner 5.1 and Manner 5.2, the second device may further determine that the cell managed by the first device and the cell accessed by the second device are intra-frequency cells or adjacent-frequency cells. For example, the first device is a satellite and the second device is a terminal device. The terminal device may receive a synchronization signal from the satellite on a frequency, where the frequency is a frequency used by the satellite. Similarly, the terminal device may further access another satellite other than the satellite, or the terminal device may further access a base station. Therefore, the terminal device may learn of a frequency used by the another satellite or a frequency used by the base station, and may further determine, based on the frequency used by the satellite and the frequency used by the another satellite, or determine, based on the frequency used by the satellite and the frequency used by the base station, that a cell managed by the satellite and a cell accessed by the terminal device are intra-frequency cells or adjacent-frequency cells. In an example, the frequency used by the satellite serving as the first device is the same as a frequency used by another satellite, and a cell managed by the satellite and a cell accessed by the terminal device are intra-frequency cells. In another example, a frequency used by the satellite serving as the first device is different from a frequency used by another satellite, a difference between the frequency used by the satellite and the frequency used by the another satellite is less than a preset threshold, and a cell managed by the satellite and a cell accessed by the terminal device are adjacent-frequency cells.

Therefore, with reference to Manner 5.1 or Manner 5.2, the indication information #A may further indicate that the cell managed by the first device and the cell accessed by the second device are intra-frequency cells or adjacent-frequency cells. To be specific, after the terminal device determines that the cell managed by the first device and the cell accessed by the terminal device are intra-frequency cells or adjacent-frequency cells, the terminal device may notify the first device via the indication information #A, so that the first device may learn that the cell managed by the first device and the cell accessed by the terminal device are intra-frequency cells or adjacent-frequency cells.

Optionally, when the first device is a base station or a satellite, and the second device is a base station, when the first device is a base station and the second device is a satellite, or when the first device and the second device are satellites, the first geographic area may be any one of the following:

Manner 6.1: an overlapping area between the geographic area covered by the cell managed by the first device and the geographic area covered by the cell managed by the second device.

Manner 6.2: a geographic area covered by the cell managed by the second device.

Optionally, when the first device is a satellite, and the second device is an OAM device, the first geographic area may be any one of the following. This is not limited herein.

Manner 7.1: The first geographic area is an overlapping area between the geographic area covered by the cell managed by the satellite and the geographic area covered by the cell corresponding to the OAM device.

Manner 7.2: The first geographic area is the geographic area covered by the cell corresponding to the OAM device.

Optionally, when the first device is a base station or a satellite, and the second device is a terminal device, the first geographic area may be any one of the following. This is not limited herein.

Manner 8.1: an overlapping area between a geographic area covered by a cell managed by the base station or the satellite and a geographic area covered by a cell accessed by the terminal device.

Manner 8.2: the geographic area covered by the cell accessed by the second device.

Optionally, when the first device and the second device are base stations, step 501 includes: The first device receives the indication information #A from the second device through an interface between the first device and the second device. The interface between the first device and the second device may be, for example, an Xn interface between the base stations.

Optionally, when the first device is a satellite and the second device is a base station, or when the first device is a base station and the second device is a satellite, step 501 may include: The first device receives the indication information #A from the second device through an interface between the first device and the second device, or the first device receives a broadcast message from the second device by using a detection module. The broadcast message includes the indication information #A, and the detection module may be integrated in the base station, or may be independent of the base station.

Optionally, when the first device is a base station or a satellite, and the second device is a terminal device, step 501 may include: The first device receives the indication information #A from the second device through an interface between the first device and the second device. The interface between the first device and the second device may be, for example, a Uu interface between the first device and the second device.

After step 501 is performed, the first device further performs step 502. Step 502 may be performed in the communication scenario shown in any one of the implementations in Manner 1.1 to Manner 1.3.

502: The first device performs interference avoidance in the first geographic area.

Optionally, step 502 is implemented in any one of the following manners. This is not limited herein.

Manner 8.1: When the first device is a base station, and the second device is a base station, or the second device is a satellite, the first device schedules, in the first geographic area by using a first frequency domain resource, a terminal device in the cell managed by the first device; the first device does not schedule, in the first geographic area, a terminal device in the cell managed by the first device; or the first device indicates a terminal device in the cell managed by the first device to hand over to a cell on another frequency. The first frequency domain resource is a frequency domain resource available to the first device, or the first frequency domain resource does not include a frequency domain resource available to the second device. It can be learned that the first device does not schedule, in the first geographic area, the terminal device in the cell managed by the first device, or the first device indicates the terminal device in the cell managed by the first device to hand over to the cell on another frequency. This is equivalent to that the first device does not send a signal in the first geographic area. Therefore, there is no interference to a signal sent by the second device.

Manner 8.2: When the first device is a satellite and the second device is a base station, or when the first device and the second device are satellites, the first device schedules, in the first geographic area by using a second frequency domain resource, a terminal device in the cell managed by the first device; the first device disables a signal in the first geographic area; or the first device does not send a signal in the first geographic area. The second frequency domain resource is a frequency domain resource available to the first device, or the second frequency domain resource does not include a frequency domain resource available to the second device. It can be learned that the first device disables the signal in the first geographic area, or the first device does not send a signal in the first geographic area. Therefore, there is no interference to a signal sent by the second device.

Manner 8.3: When the first device is a satellite and the second device is an OAM device, the first device schedules, in the first geographic area by using a third frequency domain resource, a terminal device in the cell managed by the first device; the first device disables a signal in the first geographic area; or the first device does not send a signal in the first geographic area. The third frequency domain resource is a frequency domain resource available to the first device, or the third frequency domain resource does not include a frequency domain resource available to the network device managed by the second device. It can be learned that the first device disables the signal in the first geographic area, or the first device does not send a signal in the first geographic area. Therefore, there is no interference to a signal sent by the second device.

Manner 8.4: When the first device is a base station or a satellite, and the second device is a terminal device, the first device schedules, in the first geographic area by using a fourth frequency domain resource, a terminal device in the cell managed by the first device; the first device disables a signal in the first geographic area; or the first device does not send a signal in the first geographic area. The fourth frequency domain resource is a frequency domain resource reserved by the second device. It can be learned that the first device disables the signal in the first geographic area, or the first device does not send a signal in the first geographic area. Therefore, there is no interference to a signal sent by the second device.

Optionally, to help the first device perform interference avoidance in the first geographic area, the second device further sends indication information to the first device, so that the first device can schedule, in the first geographic area based on a frequency domain resource indicated by the indication information, the terminal device in the cell managed by the first device.

Specifically, in an example, for any one of Manner 8.1 and Manner 8.2, the method further includes: The first device receives indication information #D from the second device, and correspondingly, the second device sends the indication information #D to the first device. The indication information #D indicates a frequency domain resource that can be used by the first device or the second device. That the first device receives the indication information #D from the second device may be performed before step 501 or step 502. It can be learned that the first device receives the indication information #D from the second device, so that the first device can stagger, in the first geographic area, the frequency domain resource available to the first device and the frequency domain resource available to the second device.

In another example, for Manner 8.3, the method further includes: The first device receives indication information #E from the second device, and correspondingly, the second device sends the indication information #E to the first device. The indication information #E indicates the frequency domain resource that can be used by the first device or the frequency domain resource that can be used by the network device managed by the second device. That the first device receives the indication information #E from the second device may be performed before step 501 or step 502. It can be learned that the first device receives the indication information #E from the second device, so that the first device can stagger, in the first geographic area, the frequency domain resource available to the first device and the frequency domain resource available to the network device managed by the second device.

In still another example, for Manner 8.4, the method includes: The first device receives indication information #F from the second device, and correspondingly, the second device sends the indication information #F to the first device. The indication information #F indicates the frequency domain resource reserved by the second device. That the first device receives the indication information #F from the second device may be performed before step 501 or step 502. It can be learned that the first device receives the indication information #F from the second device, so that the first device can schedule, in the first geographic area without using the frequency domain resource reserved by the second device, a terminal device in the cell managed by the first device.

By using the foregoing technical solution, because the first geographic area overlaps with the geographic area covered by the first device, the first device may perform interference avoidance in the first geographic area, that is, implement interference avoidance more accurately and effectively. Because the first device does not need to stagger, in another geographic area, a used frequency domain resource and a frequency domain resource used by another network device to avoid interference, resource utilization is improved.

Optionally, in an implementation of this application, the method includes step 503.

503: The second device sends a first message to the first device, where the first message indicates the first device to stop interference avoidance.

Correspondingly, the first device may receive the first message from the second device.

Optionally, the first message indicates the first device to stop performing interference avoidance in the first geographic area. For example, the first message includes the first geographic area information. Specifically, the second device may send the first message to the first device in any one of the following manners.

Manner 9.1: When the first device is a base station and the second device is a satellite, when the first device is a satellite and the second device is a base station, or when the first device and the second device are satellites, the second device sends the first message to the first device when the second device determines that the geographic area covered by the cell managed by the first device does not overlap with the geographic area covered by the cell managed by the second device.

Manner 9.2: When the first device is a base station and the second device is a satellite, when the first device is a satellite and the second device is a base station, or when the first device and the second device are satellites, the second device sends the first message to the first device when no terminal device accesses the second device.

Manner 9.3: When the first device is a satellite, the second device is an OAM device, and the second device determines that the geographic area covered by the cell managed by the first device does not overlap with the geographic area covered by the cell corresponding to the second device, the second device sends the first message to the first device.

Manner 9.4: When the first device is a satellite, the second device is an OAM device, and no terminal device accesses the network device managed by the second device, the second device sends the first message to the first device.

Manner 9.5: When the first device is a base station or a satellite, the second device is a terminal device, and the second device determines that the geographic area covered by the cell managed by the first device does not overlap with the geographic area covered by the cell accessed by the second device, the second device sends the first message to the first device.

It can be learned that for Manner 9.1, because the satellite is in a moving state, there is a case in which the geographic area covered by the cell managed by the first device does not overlap with the geographic area covered by the cell managed by the second device. In this case, the second device may send the first message to the first device, so that the first device stops interference avoidance. In addition, for Manner 9.2, when no terminal device accesses the second device, the second device may also send the first message to the first device, so that the first device stops interference avoidance. To be specific, a frequency domain resource is not staggered in the first geographic area. This improves resource utilization. It should be understood that beneficial effect that can be achieved in Manner 9.3 is similar to that in Manner 9.1, and beneficial effect that can be achieved in Manner 9.4 or Manner 9.5 is similar to that in Manner 9.2. Details are not described again.

Optionally, in an implementation of this application, the method further includes step 504 and step 505.

504: The second device sends a second message to the first device, where the second message indicates a second geographic area, and the second geographic area overlaps with the geographic area covered by the first device.

Correspondingly, the first device may receive the second message from the second device.

505: The first device performs interference avoidance in the second geographic area.

For a process of performing interference avoidance in the second geographic area, refer to the process of performing interference avoidance in the first geographic area. Details are not described herein again.

In an implementation, step 504 and step 505 may be performed after step 502.

In an implementation, the method provided in this application includes the step 503, and also includes step 504 and step 505. For example, the second device performs step S503 to send, to the first device, the first message that indicates the first device to stop interference avoidance in the first geographic area. In addition, the second device performs step S504 to send, to the first device, the second message indicating the second geographic area, and the first device performs step S505 to perform interference avoidance in an area that is in the second geographic area and that is not overlapped with the first geographic area. It may be understood that there is no limitation on an execution sequence of step S503 and step S504.

In an example, the first geographic area and the second geographic area partially overlap. In another example, the first geographic area and the second geographic area completely overlap, and the first geographic area is larger or smaller than the second geographic area. In still another example, the first geographic area and the second geographic area do not overlap.

Specifically, the second device may send the second message to the first device in any one of the following manners.

Manner 10.1: When the first device is a base station and the second device is a satellite, when the first device is a satellite and the second device is a base station, or when the first device and the second device are satellites, and when the second device determines that the overlapping area between the geographic area covered by the cell managed by the first device and the geographic area covered by the cell managed by the second device changes, the second device may further send the second message to the first device.

Manner 10.2: When the first device is a base station and the second device is a satellite, when the first device is a satellite and the second device is a base station, or when the first device and the second device are satellites, and when a quantity of terminal devices accessing the second device changes, the second device sends the second message to the first device.

Manner 10.3: When the first device is a satellite and the second device is an OAM device, and when the second device determines that an overlapping area between the geographic area covered by the cell managed by the first device and the geographic area covered by the cell corresponding to the second device changes, the second device sends the second message to the first device.

Manner 10.4: When the first device is a base station or a satellite, and the second device is a terminal device, and when the second device determines that the overlapping area between the geographic area covered by the cell managed by the first device and the geographic area covered by the cell managed by the second device changes, the second device sends the second message to the first device.

It can be learned that, for Manner 10.1, because the satellite is in a moving state, there is a case in which the overlapping area between the geographic area covered by the cell managed by the first device and the geographic area covered by the cell managed by the second device changes, that is, an area in which interference avoidance is performed changes. In this case, the second device may further send the second message to the first device, so that the first device performs interference avoidance in the second geographic area. For Manner 10.2, the indication information #A may be the location information of the terminal device accessing the second device or the information about the geographic area covered by the beam of the second device, the information about the geographic area covered by the beam of the second device may be determined based on the location information of the terminal device, and the first device learns of the first geographic area based on the indication information #A. Therefore, when the quantity of the terminal devices changes, an area in which interference avoidance is performed may change. In these cases, the second device may further send the second message to the first device, so that the first device performs interference avoidance in the second geographic area, that is, interference avoidance is performed more accurately and effectively when the area in which interference avoidance is performed changes. In addition, the first device does not perform interference avoidance in another geographic area other than the second geographic area. For example, the first device may not stagger a frequency domain resource in the another geographic area. This can improve resource utilization. It should be understood that beneficial effect that can be achieved in Manner 10.3 is similar to that in Manner 10.1, and beneficial effect that can be achieved in Manner 10.4 or Manner 10.5 is similar to that in Manner 10.2. Details are not described again.

The foregoing mainly describes the solutions provided in this application from the perspective of interaction between devices. It may be understood that, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first device or the second device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that module division in this embodiment of this application is an example, and is merely logical function division. In actual implementation, there may be another division manner.

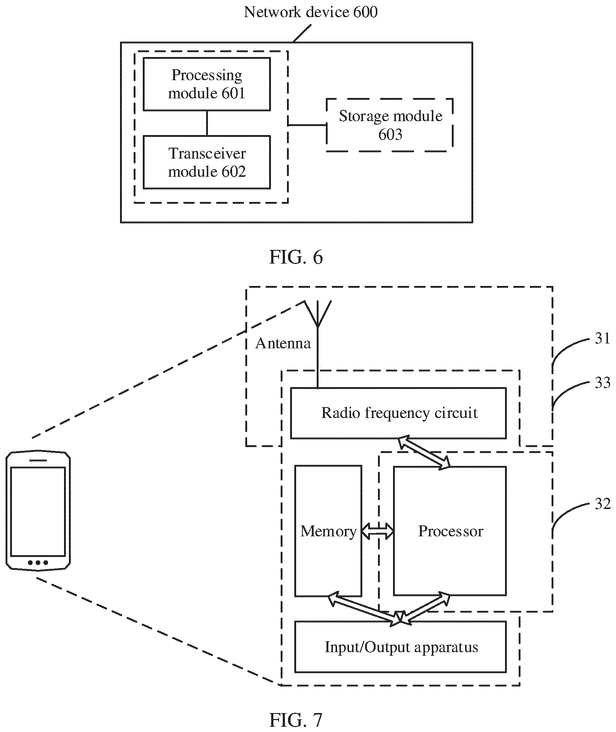

When an integrated module is used, FIG. 6 is a diagram of a structure of a network device according to an embodiment of this application. The network device 600 may be applied to the method shown in FIG. 5. As shown in FIG. 6, the network device 600 includes a processing module 601 and a transceiver module 602. The processing module 601 may be one or more processors, and the transceiver module 602 may be a transceiver or a communication interface. The network device may be configured to implement a function of the first device or the second device in any one of the foregoing method embodiments, or configured to implement a function of a network element in any one of the foregoing method embodiments. The network element or network function may be a network element in a hardware device, a software function running on dedicated hardware, or a virtualization function instantiated on a platform (for example, a cloud platform). Optionally, the network device 600 may further include a storage module 603, configured to store program code and data of the network device 600.

In an example, the network device is used as the first device or a chip used in the first device, and performs steps performed by the first device in the foregoing method embodiments. The transceiver module 602 is configured to support communication with the second device and the like. The transceiver module specifically performs a sending and/or receiving action performed by the first device in FIG. 5, for example, supports the first device in performing another process of the technology described in this specification. The processing module 601 may be configured to support the network device 600 in performing a processing action in the foregoing method embodiments, for example, support the first device in performing step 502, and/or another process of the technology described in this specification.

For example, the transceiver module 602 is configured to receive indication information #A from the second device. The indication information #A indicates a first geographic area, and the first geographic area overlaps with a geographic area covered by the first device. The processing module 601 is configured to perform interference avoidance in the first geographic area.

In an example, the network device is used as the second device or a chip used in the second device, and performs steps performed by the second device in the foregoing method embodiments. The transceiver module 602 is configured to support communication with the first device and the like. The transceiver module specifically performs a sending and/or receiving action performed by the second device in FIG. 5, for example, supports the second device in performing another process of the technology described in this specification. The processing module 601 may be configured to support the network device 600 in performing the processing actions in the foregoing method embodiments, for example, support the second device in performing another process of the technology described in this specification.

For example, the transceiver module 602 is configured to send indication information #A to the first device. The indication information #A indicates a first geographic area, and the first geographic area overlaps with a geographic area covered by the first device.

In a possible implementation, when the first device or the second device is a chip, the transceiver module 602 may be a communication interface, a pin, a circuit, or the like. The communication interface may be configured to input to-be-processed data to a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 601 may be a processor. The processor may execute computer-executable instructions stored in the storage module, so that the chip performs the method in the embodiment in FIG. 5.

Further, the processor may include a controller, an arithmetic unit, and a register. For example, the controller is mainly responsible for instruction decoding, and transmitting a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an application-specific integrated circuit (application-specific integrated circuit, ASIC) architecture, a microprocessor without interlocked piped stages architecture (microprocessor without interlocked piped stages architecture, MIPS), an advanced reduced instruction set computing machine (advanced RISC machine, ARM) architecture, a network processor (network processor, NP) architecture, or the like. The processor may be a single-core or multi-core processor.

The storage module may be a storage module inside the chip, for example, a register or a cache. Alternatively, the storage module may be a storage module located outside the chip, for example, a read-only memory (read-only memory, ROM), another type of static storage device that can store static information and instructions, or a random access memory (random access memory, RAM).

It should be noted that a function corresponding to each of the processor and the interface may be implemented by using a hardware design, may be implemented by using a software design, or may be implemented by a combination of software and hardware. This is not limited herein.

FIG. 7 is a diagram of a structure of a simplified terminal device according to an embodiment of this application. For ease of understanding and illustration, in FIG. 7, a mobile phone is used as an example of the terminal device. It may be understood that the terminal device in FIG. 7 may be a terminal device. This is not limited herein. As shown in FIG. 7, the terminal device includes at least one processor, and may further include a radio frequency circuit, an antenna, and an input/output apparatus. The processor may be configured to process a communication protocol and communication data, and may be further configured to control the terminal device, execute a software program, process data of the software program, and the like. The terminal device may further include a memory. The memory is mainly configured to store a software program and data. These related programs may be loaded into the memory when the communication apparatus is delivered from a factory, or may be loaded into the memory when needed later. The radio frequency circuit is mainly configured to: perform conversion between a baseband signal and a radio frequency signal, and process the radio frequency signal. The antenna is mainly configured to receive/send a radio frequency signal in an electromagnetic wave form, and the antenna is the antenna provided in this embodiment of this application. The input/output apparatus, like a touchscreen, a display, or a keyboard, is mainly configured to: receive data input by a user and output data to the user. It should be noted that some types of terminal devices may have no input/output apparatus.

When data needs to be sent, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, only one memory and one processor are shown in FIG. 7. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, an antenna having sending and receiving functions and the radio frequency circuit may be considered as a receiving unit and a sending unit (which may also be collectively referred to as a transceiver unit) of the terminal device, and a processor having a processing function may be considered as a processing unit of the terminal device. As shown in FIG. 7, the terminal device includes a receiving module 31, a processing module 32, and a sending module 33. The receiving module 31 may also be referred to as a receiver, a receiving device, a receiver circuit, or the like. The sending module 33 may also be referred to as a sender, a transmitter, a transmitting device, a transmitter circuit, or the like. The processing module 32 may also be referred to as a processor, a processing board, a processing apparatus, or the like.

For example, the processing module 32 is configured to perform a function of the terminal device in the embodiment shown in FIG. 5.

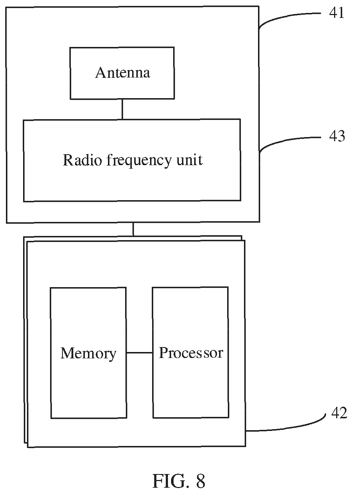

FIG. 8 is a diagram of a structure of a simplified terrestrial network device according to an embodiment of this application. The terrestrial network device includes a part 42 and a part for radio frequency signal transmission/reception and conversion. The part for radio frequency signal transmission/reception and conversion further includes a receiving module 41 and a sending module 43 (which may also be collectively referred to as a transceiver module). The part for radio frequency signal transmission/reception and conversion is mainly configured to: send/receive a radio frequency signal and perform conversion between a radio frequency signal and a baseband signal. The part 42 is mainly configured to: perform baseband processing, control the terrestrial network device, and the like. The receiving module 41 may also be referred to as a receiver, a receiving device, a receiver circuit, or the like. The sending module 43 may also be referred to as a sender, a transmitter, a transmitting device, a transmitter circuit, or the like. The part 42 is usually a control center of the terrestrial network device, may usually be referred to as a processing module, and is configured to control the terrestrial network device to perform steps performed by the terrestrial network device in FIG. 5. For details, refer to the foregoing descriptions of the related parts.

The part 42 may include one or more boards. Each board may include one or more processors and one or more memories. The processor is configured to read and execute a program in the memory to implement a baseband processing function and control the terrestrial network device. If there are a plurality of boards, the boards may be interconnected to improve a processing capability. In an optional implementation, the plurality of boards may share one or more processors, or the plurality of boards share one or more memories, or the plurality of boards share one or more processors at the same time.

For example, for the terrestrial network device, the sending module 43 is configured to perform a function of the terrestrial network device in the embodiment shown in FIG. 5.

An embodiment of this application further provides a communication apparatus, including a processor and a memory. The processor invokes a computer program stored in the memory to implement the embodiment shown in FIG. 5.

An embodiment of this application further provides a computer-readable storage medium. The computer-readable storage medium stores a computer program. When the computer program is run, the embodiment shown in FIG. 5 is implemented.

An embodiment of this application further provides a computer program product. When a computer reads and executes a computer program product, the computer is enabled to implement the embodiment shown in FIG. 5.

The foregoing units described as separate parts may or may not be physically separate, and parts displayed as units may or may not be physical units, may be located in one position, or may be distributed on a plurality of network units. Some or all of the units may be selected based on an actual requirement, to achieve the objectives of the solutions in embodiments of this application. In addition, the network element units in embodiments of this application may be integrated into one processing unit, or each of the units may exist alone physically, or two or more units are integrated into one unit. The integrated unit may be implemented in a form of hardware, or may be implemented in a form of a software network element unit.

When the integrated unit is implemented in the form of a software network element unit and sold or used as an independent product, the integrated unit may be stored in a computer-readable storage medium. Based on such an understanding, a part essentially contributing to the technical solutions of this application, or all or some of the technical solutions may be embodied in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc. The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. An interference avoidance method, wherein the method is applied to a first device, and the method comprises:
receiving first indication information from a second device, wherein the first indication information indicates a first geographic area, and the first geographic area overlaps with a geographic area covered by the first device; and
performing interference avoidance in the first geographic area.

2. The method according to claim 1, wherein
the first device is a terrestrial network device, and the second device is a terrestrial network device;
the first device is a terrestrial network device, and the second device is a non-terrestrial network device;
the first device is a non-terrestrial network device, and the second device is a terrestrial network device; or
the first device is a non-terrestrial network device, and the second device is a non-terrestrial network device.

3. The method according to claim 1 or 2, wherein
the first geographic area is an overlapping area between a geographic area covered by a cell managed by the first device and a geographic area covered by a cell managed by the second device; or
the first geographic area is a geographic area covered by a cell managed by the second device.

4. The method according to claim 1 or 2, wherein the first indication information comprises one or more of the following: location information of the second device, location information of a terminal device accessing the second device, and information about a geographic area covered by a beam of the second device.

5. The method according to any one of claims 1 to 4, wherein the first indication information further indicates that the cell managed by the first device and the cell managed by the second device are intra-frequency cells or adjacent-frequency cells.

6. The method according to claim 1, wherein
the first device is a non-terrestrial network device, and the second device is an operations, administration, and maintenance OAM device.

7. The method according to claim 1 or 6, wherein
the first geographic area is an overlapping area between a geographic area covered by a cell managed by the first device and a geographic area covered by a cell corresponding to the second device; or
the first geographic area is a geographic area covered by a cell corresponding to the second device, wherein
the cell corresponding to the second device is a cell covered by a network device managed by the second device.

8. The method according to claim 1 or 6, wherein
the first indication information comprises one or more of the following: location information of a network device managed by the second device, location information of a terminal device accessing the network device, and information about a geographic area covered by a beam of the network device.

9. The method according to any one of claims 1 and 6 to 8, wherein the first indication information further indicates that the cell managed by the first device and the cell corresponding to the second device are intra-frequency cells or adjacent-frequency cells, and the cell corresponding to the second device is the cell covered by the network device managed by the second device.

10. The method according to claim 1, wherein
the first device is a terrestrial network device, and the second device is a terminal device; or
the first device is a non-terrestrial network device, and the second device is a terminal device.

11. The method according to claim 1 or 10, wherein
the first geographic area is an overlapping area between a geographic area covered by a cell managed by the first device and a geographic area covered by a cell accessed by the second device; or
the first geographic area is a geographic area covered by a cell accessed by the second device.

12. The method according to claim 1 or 10, wherein the first indication information comprises location information of the second device.

13. The method according to claim 1 or any one of claims 10 to 12, wherein the first indication information further indicates that the cell managed by the first device and the cell accessed by the second device are intra-frequency cells or adjacent-frequency cells.

14. The method according to any one of claims 1 and 3 to 5, wherein when the first device is a terrestrial network device, and the second device is a terrestrial network device, or the second device is a non-terrestrial network device, the performing interference avoidance in the first geographic area comprises:
scheduling, in the first geographic area by using a first frequency domain resource, a terminal device in the cell managed by the first device, wherein the first frequency domain resource is a frequency domain resource available to the first device, or the first frequency domain resource does not comprise a frequency domain resource available to the second device;
skipping scheduling, in the first geographic area, a terminal device in the cell managed by the first device; or
indicating a terminal device in the cell managed by the first device to hand over to a cell on another frequency.

15. The method according to any one of claims 1 and 3 to 5, wherein when the first device is a non-terrestrial network device and the second device is a terrestrial network device, or when the first device and the second device are non-terrestrial network devices, the performing interference avoidance in the first geographic area comprises:
scheduling, in the first geographic area by using a second frequency domain resource, a terminal device in the cell managed by the first device, wherein the second frequency domain resource is a frequency domain resource available to the first device, or the second frequency domain resource does not comprise a frequency domain resource available to the second device;
disabling a signal in the first geographic area; or
skipping sending a signal in the first geographic area.

16. The method according to claim 14 or 15, wherein the method further comprises:
receiving second indication information from the second device, wherein the second indication information indicates a frequency domain resource available to the first device or the second device.

17. The method according to any one of claims 1 and 6 to 9, wherein when the first device is a non-terrestrial network device and the second device is an OAM device, the performing interference avoidance in the first geographic area comprises:
scheduling, in the first geographic area by using a third frequency domain resource, a terminal device in the cell managed by the first device, wherein the third frequency domain resource is a frequency domain resource available to the first device, or the third frequency domain resource does not comprise a frequency domain resource available to the network device managed by the second device;
disabling a signal in the first geographic area; or
skipping sending a signal in the first geographic area.

18. The method according to claim 17, wherein the method further comprises:
receiving third indication information from the second device, wherein the third indication information indicates the frequency domain resource available to the first device or the frequency domain resource available to the network device managed by the second device.

19. The method according to any one of claims 1 and 10 to 13, wherein when the first device is a terrestrial network device or a non-terrestrial network device, and the second device is a terminal device, the performing interference avoidance in the first geographic area comprises:
scheduling, in the first geographic area by using a fourth frequency domain resource, a terminal device in the cell managed by the first device, wherein the fourth frequency domain resource is a frequency domain resource reserved by the second device;
disabling a signal in the first geographic area; or
skipping sending a signal in the first geographic area.

20. The method according to claim 19, wherein the method further comprises:
receiving fourth indication information from the second device, wherein the fourth indication information indicates the frequency domain resource reserved by the second device.

21. An interference avoidance method, wherein the method is applied to a second device, and the method comprises:
sending first indication information to a first device, wherein the first indication information indicates a first geographic area, and the first geographic area overlaps with a geographic area covered by the first device.

22. The method according to claim 21, wherein
the first device is a terrestrial network device, and the second device is a terrestrial network device;
the first device is a terrestrial network device, and the second device is a non-terrestrial network device;
the first device is a non-terrestrial network device, and the second device is a terrestrial network device; or
the first device is a non-terrestrial network device, and the second device is a non-terrestrial network device.

23. The method according to claim 21 or 22, wherein
the first geographic area is an overlapping area between a geographic area covered by a cell managed by the first device and a geographic area covered by a cell managed by the second device; or
the first geographic area is a geographic area covered by a cell managed by the second device.

24. The method according to claim 21 or 22, wherein the first indication information comprises one or more of the following: location information of the second device, location information of a terminal device accessing the second device, and information about a geographic area covered by a beam of the second device.

25. The method according to any one of claims 21 to 24, wherein the first indication information further indicates that the cell managed by the first device and the cell managed by the second device are intra-frequency cells or adjacent-frequency cells.

26. The method according to claim 21, wherein
the first device is a non-terrestrial network device, and the second device is an operations, administration, and maintenance OAM device.

27. The method according to claim 21 or 26, wherein
the first geographic area is an overlapping area between a geographic area covered by a cell managed by the first device and a geographic area covered by a cell corresponding to the second device; or
the first geographic area is a geographic area covered by a cell corresponding to the second device, wherein
the cell corresponding to the second device is a cell covered by a network device managed by the second device.

28. The method according to claim 21 or 26, wherein
the first indication information comprises one or more of the following: location information of a network device managed by the second device, location information of a terminal device accessing the network device, and information about a geographic area covered by a beam of the network device.

29. The method according to any one of claims 21 and 26 to 28, wherein the first indication information further indicates that the cell managed by the first device and the cell corresponding to the second device are intra-frequency cells or adjacent-frequency cells, and the cell corresponding to the second device is the cell covered by the network device managed by the second device.

30. The method according to claim 21, wherein
the first device is a terrestrial network device, and the second device is a terminal device; or
the first device is a non-terrestrial network device, and the second device is a terminal device.

31. The method according to claim 21 or 30, wherein
the first geographic area is an overlapping area between a geographic area covered by a cell managed by the first device and a geographic area covered by a cell accessed by the second device; or
the first geographic area is a geographic area covered by a cell accessed by the second device.

32. The method according to claim 21 or 30, wherein the first indication information comprises location information of the second device.

33. The method according to claim 21 or any one of claims 30 to 32, wherein the first indication information further indicates that the cell managed by the first device and the cell accessed by the second device are intra-frequency cells or adjacent-frequency cells.

34. The method according to any one of claims 21 and 23 to 25, wherein when the first device is a terrestrial network device or a non-terrestrial network device, and the second device is a terrestrial network device, or when the first device and the second device are non-terrestrial network devices, the method further comprises:
if the second device detects a synchronization signal from the first device, determining that the geographic area covered by the cell managed by the first device overlaps with the geographic area covered by the cell managed by the second device;
if the second device detects that a signal strength of a synchronization signal from the first device is greater than a preset threshold, determining that the geographic area covered by the cell managed by the first device overlaps with the geographic area covered by the cell managed by the second device; or
receiving fifth indication information from the terminal device accessing the second device, wherein the fifth indication information indicates that the geographic area covered by the cell managed by the first device overlaps with the geographic area covered by the cell managed by the second device.

35. The method according to any one of claims 21 and 26 to 29, wherein when the first device is a non-terrestrial network device and the second device is an OAM device, the method further comprises:
determining, based on the location information of the network device managed by the second device and the geographic area covered by the cell managed by the first device, that the geographic area covered by the cell managed by the first device overlaps with the geographic area covered by the cell corresponding to the second device, wherein the cell corresponding to the second device is the cell covered by the network device managed by the second device.

36. The method according to any one of claims 21 and 30 to 33, wherein when the first device is a non-terrestrial network device or a terrestrial network device, and the second device is a terminal device, the method further comprises:
if the second device detects a synchronization signal from the first device, determining that the geographic area covered by the cell managed by the first device overlaps with the geographic area covered by the cell accessed by the second device; or
if the second device detects that a signal strength of a synchronization signal from the first device is greater than a preset threshold, determining that the geographic area covered by the cell managed by the first device overlaps with the geographic area covered by the cell accessed by the second device.

37. The method according to any one of claims 21 to 25, wherein when the first device is a terrestrial network device and the second device is a terrestrial network device, when the first device is a terrestrial network device and the second device is a non-terrestrial network device, when the first device is a non-terrestrial network device and the second device is a terrestrial network device, or when the first device and the second device are non-terrestrial network devices, the method further comprises:
sending second indication information to the first device, wherein the second indication information indicates a frequency domain resource available to the first device or the second device.

38. The method according to any one of claims 21 and 26 to 29, wherein when the first device is a non-terrestrial network device and the second device is an OAM device, the method further comprises:
sending third indication information to the first device, wherein the third indication information indicates a frequency domain resource available to the first device or a frequency domain resource available to the network device managed by the second device.

39. The method according to any one of claims 21 and 30 to 33, wherein when the first device is a terrestrial network device and the second device is a terminal device; or when the first device is a non-terrestrial network device and the second device is a terminal device, the method further comprises:
sending fourth indication information to the first device, wherein the fourth indication information indicates a frequency domain resource reserved by the second device.

40. A network device, wherein the network device comprises a module or a unit configured to perform the method according to any one of claims 1 to 20.

41. A network device, wherein the network device comprises a module or a unit configured to perform the method according to any one of claims 21 to 39.

42. A communication system, wherein the communication system comprises a first device and a second device, the first device is configured to perform the method according to any one of claims 1 to 20, and the second device is configured to perform the method according to any one of claims 21 to 39.

43. A communication apparatus, comprising a processor, wherein the processor invokes a computer program stored in a memory to implement the method according to any one of claims 1 to 20.

44. A communication apparatus, comprising a processor, wherein the processor invokes a computer program stored in a memory to implement the method according to any one of claims 21 to 39.

45. A computer program product comprising instructions, wherein when the computer program product is executed on a computer, the method according to any one of claims 1 to 39 is performed.

46. A computer-readable storage medium, wherein the computer-readable storage medium stores a computer program; and when the computer program is run, the method according to any one of claims 1 to 39 is implemented.
